# EUROPEAN PATENT SPECIFICATION

(11) **EP 2 169 115 B1**
(45) Date of publication and mention of the grant of the patent: **21.12.2016**
(21) Application number: 08750427.0
(22) Date of filing: 03.04.2008
(51) Int. Cl.: E01B 9/18, E01B 31/26, F16B 39/10

(54) **SHEATH FOR FASTENING RAILWAY RAILS, METHOD FOR REPLACING SAID SHEATH IN A SLEEPER AND TOOLS FOR PERFORMING SAID METHOD**
HÜLLE ZUR BEFESTIGUNG VON EISENBAHNSCHIENEN, VERFAHREN ZUM AUSTAUSCH DER HÜLLE IN EINER SCHWELLE UND WERKZEUGE ZUR DURCHFÜHRUNG DES VERFAHRENS
GAINE POUR LA FIXATION DE RAILS FERROVIAIRES, PROCÉDÉ DE REMPLACEMENT DE CETTE GAINE DANS UNE TRAVERSE ET OUTILS POUR LA RÉALISATION DUDIT PROCÉDÉ

(30) Priority: 04.04.2007 ES 200700911
(43) Date of publication of application: 31.03.2010
(73) Proprietor: Railtech Sufetra, S.A., 08901 L'Hospitalet de Llobregat, Barcelona (ES)
(72) Inventor: VIVES CLAVEL, Juan, E-46550 Albuixech (valencia) (ES)
(74) Representative: Carpintero Lopez, Francisco
(86) International application number: PCT/ES2008/000200
(87) International publication number: WO 2008/122683

(56) References cited:
- EP-A1- 1 726 713
- EP-A1- 1 726 713
- DD-A1- 134 370
- DD-A1- 134 370
- DE-U- 1 939 670
- ES-T3- 2 196 099
- ES-T3- 2 196 099
- FR-A2- 2 425 014
- US-A- 3 549 090
- US-A- 3 549 090
- US-A- 4 284 114
- US-A- 4 284 114
- US-A- 4 785 692
- US-A- 4 785 692
- US-A1- 2002 119 027
- US-A1- 2002 119 027
- US-B1- 6 350 093

## Description

### OBJECT OF THE INVENTION

A first aspect of the present invention relates to a sheath free of projections that prevent the rotation thereof for railway track fixings, a second aspect relates to a procedure for replacing said sheath in a sleeper and a third aspect relates to tools for executing the procedure of the invention, being applicable within the scope of the railway industry, allowing the prevention of the rotation of the sheath around its own axis by means of a removable anti-rotation device, and easy and quick handling of both elements, with the ensuing reduction in costs for the effective replacement thereof in the railway track, when the sheath is deteriorated or must be replaced.

### BACKGROUND OF THE INVENTION

Different types of fixings are currently known for fixing and fastening the rails that comprise the tracks of railway lines in their service position. At each fixing point, these means comprise different elements, each of which has a specific function, among which there is at least one guide plate that serves to guide the rail, a flange, also called elastic fastening clip or band flange, an isolating base plate that is disposed underneath the rail, at least one coach screw and in some cases a support plate, all with the object of providing sufficiently firm fixation while maintaining a certain flexible nature adequate for absorbing the vibrations produced by the passage of rolling stock along the railway track.

The elastic nature of this type of fixings, in which a slipping or elastic fastening means is required, i.e. it fastens but does not immobilise the rail along the vertical axis, is determined with the object of allowing the absorption of the deformities produced in the rail, as mentioned earlier, as a consequence of the efforts produced during the circulation of the engines and wagons and prevent thermal expansion, while fulfilling its fixing function.

In the Spanish patent with publication no. ES 285328, perfections in the fixing of railway tracks on the sleepers are described, defining guide plates that serve to house coach screws and the corresponding elastic clips that fasten rails to sleepers. On the other hand, in the Spanish utility model with publication no. ES 1040050 U and in the European patent with publication no. EP 0808946, devices are also described for fixing the tracks to their supports through the incorporation of base plates that are configured to be disposed between the rail base and the surface that rests on the sleeper.

On the other hand, the Spanish utility model with publication no. ES 221908 U relates to a screw fixing device in a construction element of conglomerate material, which consists of a plastic anchoring sheath that is embedded in the sleeper, said sheath being configured to house a fixing screw in the sleeper in a threaded manner. Sheaths similar to this can be found in the French patent with publication no. FR 1484186, in the French utility model with publication no. FR2678295 U and in the Spanish patent with publication no. ES 2196099. One of the inconveniences of the sheath described in this last document is that, on not having retention means located at the top of the sheath, there are no means of preventing the sheath from moving from its service position.

The Spanish utility model with publication no. ES 1030484 U and the Spanish patent with publication no. ES 2014183 relates to sheaths for fixing screws in concrete sleepers that comprise an inner synthetic part, through which the screw is threaded, and an enclosure or external metal die-cast that comprises a plurality of ribs contained in parallel planes, all perpendicular to the screw axis.

On the other hand, in the Spanish utility model with publication no. ES 269235 U a synthetic material block is described for fixing tracks to concrete sleepers, which has a basic configuration similar to that of the aforementioned sheaths, and which incorporates an appendix at the coach screw thread end, configured to easily break through it, and which serves to join the block to the bottom plate of a sleeper form, allowing the adequate immobilisation of the block during the manufacture of the sleeper, specifically during the forming stage thereof.

Common to all these fixing devices are positioning elements, which are a kind of sleeves, disposed on the mold prior to pouring the concrete, in the positions that will be occupied by the sheaths and therefore the coach screws, according to the sleeper track gauge, the coach screw positions being considered for two track gauges in modern sleepers, introducing the sheaths in said positioning elements in the sleeper mold itself. When the concrete sets a sleeper with the final shape and dimensions required is obtained wherein the sheaths for housing the coach screws is embedded.

The drawback of all these currently used sheaths is that, when a sheath that is in service, i.e. installed on a sleeper on the railway tracks, breaks or deteriorates, their replacement through extraction, given that in one way or another they have projections that prevent the spinning or rotation thereof, requires drilling a deep hole in the concrete sleeper, specifically around the sheath, in order to extract and replace it with a new sheath, after which the hole drilled in the concrete sleeper must be filled with adhesive paste, or similar product, to adequately fix the sheath to the sleeper. The operations of this procedure are very long and expensive, as they must be carried out by qualified personnel, obviously during the stopping of railway traffic, with the inconveniences and delays implied.

Depending on the degree of sheath deterioration, and the damages caused to the sleep by the breakage thereof, in some cases it is necessary to fully replace the whole sleeper with a new one, incorporating new sheaths, which is even more complicated and expensive than the previously expounded sheath replacement procedure.

### DESCRIPTION OF THE INVENTION

A first aspect of the present invention relates to a sheath for fixing railway tracks that is fully free of projections that can prevent the rotation thereof, which comprises additional means consisting of a removable anti-rotation device configured to prevent the sheath from rotating around its own axis when it is housed in the sleeper.

The sheath proposed by the invention, in addition to the removable anti-rotation means in collaboration with tools configured to handle said elements to which the invention equally relates, effectively allows the easy, quick and optimal replacement thereof in the railway track when the sheath is deteriorated and needs to be replaced.

The sheath for fixing railway tracks of the invention is configured to contain, in a threaded manner, a coach screw for fixing a rail to a sleeper, preferably concrete, by means of a base plate disposed between said rail and said sleeper, guide plates disposed on the side edges of a base of the rail configured to house an elastic flange or clip.

During the production of a prefabricated sleeper, positioning elements, that consist of a kind of sleeves, are disposed on the mold, prior to concrete pouring, in the positions that will be occupied by the sheaths and therefore the coach screws, normally based on two track gauges on each sleeper, which determines the location of the rails and therefore the sheaths on the sleeper.

The sheaths are introduced in the interior of the sleeper mold itself on said positioning elements, in such a manner that once the concrete has set a sleeper with the final shape and dimensions required, having the sheath embedded or incrusted in its interior at the standardised distances in accordance with the track gauge required for using the sleeper.

According to the invention, the sheath consists of a single-piece, for example of synthetic or plastic material, having a cylindrical configuration with external tapering, i.e. on its outer side with the object of solving an inconvenience, i.e. during the setting process the concrete pressure is placed on the sheath, due to concrete retraction, which causes the sheath to become completely trapped in the sleeper concrete. For the purpose of overcoming this effect, which results in the complex extraction of the sheath during the replacement process thereof, the sheath tapers, being narrower at its free inner end than at the end closest to the exterior, with the object of reducing friction and facilitating its extraction which, as will be defined later, is carried out by unthreading.

The sheath comprises helical rabbetting in the form of a groove, impress or female hollowing-out which is a thread on an external surface of the cylindrical body of the sheath which does not extend to an upper straight section, i.e. without said thread. The helical rabbeting is configured to be occupied, filled or to house concrete during the concrete pouring process of the sleeper with the sheath, in such a manner that the helical rabbetting houses a helical concrete projection that forms part of the sleeper itself, said helical rabetting being configured to be threaded with respect to said helical projection, which is a thread with which the helical rabbetting collaborates.

After the concrete sets, the helical projection that is formed on the sleeper serves as a male thread for the helical rabbetting, with the object of allowing the extraction of the sheath from the sleeper by unthreading it on being free or projections that prevent the rotation thereof, without damaging in any way or tearing off sleeper material as occurred in the sheaths of state of the art.

On the other hand, the sheath comprises an inner female thread which is an internal housing configured to house an external male coach screw thread.

The helical rabbetting follows the path of the inner thread but with the peculiarity that the helical rabbetting coincides with the valleys of the inner thread, with the object of maintaining the thickness of the sheath body walls uniform, constant or regular.

The possibility of the helical rabbetting comprising an upper part with a concave curve configuration is envisaged, i.e. half-round configuration, and a lower part with a straight configuration with a slope of 45º with respect to a central sheath axis.

The geometry of the helical rabbetting is of great importance and is extremely relevant from the perspective of maximising the extraction forces required for extracting the sheath from its position on the sleeper, reason for which the helical sheath has optimal geometry. It is for this reason that the helical rabbetting preferably comprises an upper part with a curved configuration, the longitudinal section of which corresponds approximately to a quarter of the circumference, in addition to a lower part, the longitudinal section of which is straight with a slope of approximately 45º. With this geometry we achieve the decomposition of an extraction force applied to the sheath, i.e. a force oriented in a direction as to achieve the extraction of the sheath, i.e. a vertically oriented force directed upwards, into two components, one in the vertical direction of the extraction force and another in normal or perpendicular directions to the 45º slope.

According to a preferred embodiment, the sheath of the invention comprises anti-rotation means configured to prevent the rotation movement of the sheath around its central axis when it is housed in the sleeper.

Due to the sheath's ease of rotation, which is also facilitated by the tapering of the cylindrical sheath body, the anti-rotation means serve to avoid undesired unthreading, for which purpose they comprise means configured to be in contact with the sleeper and avoid the rotation of said anti-rotation means with respect to said sleeper and, given the coupling between the anti-rotation means and the sheath, also prevent sheath rotation.

The possibility of said anti-rotation means consisting of a piece with a ringed configuration is envisaged, similar to a plug or bushing, which has an internal part with a plurality of ribs, teeth or threading, configured to couple and collaborate with a plurality of complementary ribs comprised in the sheath at an external upper part, preventing a relative rotation movement between said sheath and said anti-rotation means when these are coupled.

This configuration offers multiple coupling positions between the sheath and anti-rotation means, which are configured to prevent a relative rotation movement, in such a manner that it is very easy to make the anti-rotation means in the concrete hollow coincide with the sheath body.

On the other hand, the possibility of the anti-rotation means comprising an external part having a polygonal transverse section is envisaged, preferably hexagonal, configured to prevent a relative rotation movement between said anti-rotation means and the sleeper.

Additionally, according to an embodiment of the anti-rotation means these comprise at least two slits, on an upper side, each slit being covered by a flange, and having at least two stops on the inner part, preferably with bayonet closing means, with which a tool will collaborate to extract said anti-rotation means from a coupled position with the sheath, as will be defined later.

A second aspect of the invention relates to a procedure for replacing, substituting, extracting, handling or disassembling a sheath as that previously defined in a sleeper, preferably concrete, that comprises the following stages:
- unthread the coach screw,
- traction the anti-rotation means separating them from the sheath,
- unthread the sheath from the sleeper by unthreading the helical rabbetting from the helical projection,
- thread another sheath in the sleeper by threading the helical rabbetting in the helical projection,
- couple anti-rotation means to the upper part of the sheath, and
- thread a coach screw.

Finally, a third aspect of the invention relates to tools for executing the previously described procedure.

On one hand, the invention relates to a first tool configured to extract the anti-rotation means from a coupled position with the sheath, for which said first tool is comprised of an axis with an end having as many flaps as slits in the anti-rotation means, preferably two, said flaps being configured to break the protection flanges that cover the slits and insert the anti-rotation means in said slits through the action of a weight configured to slip through the axis, said flaps being configured to collaborate, i.e. to contact, with the stops comprised in the anti-rotation means, thereby allowing the extraction and separation thereof with respect to the sheath.

The protection flanges consist of a thin wall, preferably plastic, and are configured to avoid the introduction of earth during the time that it is in service on the railway track until possible breakage ensues.

Obviously, the number of flaps of the first tool coincides with the number of slits of the anti-rotation means.

To produce the breakage of the flanges that cover or protect the slits, the flaps are disposed in correspondence with said slits, i.e. over these in the same location. Next, a weight is actuated by striking, disposed with the possibility of movement or slippage around the axis, which is configured to impact and break the flanges, allowing the flaps to be inserted into the slits.

On the other hand, the anti-rotation means comprise a stop, disposed in the internal part, which can be bayonet closing means configured to contact with the flaps when on axis rotation, allowing the first tool to stop against the anti-rotation means, moment in which the aforementioned weight is actuated with a down-up movement, to extract said anti-rotation means from their coupled position with the sheath.

Likewise, the invention relates to a second tool, configured to extract the sheath from the sleeper, which comprises an axis having a male extraction thread in a lower end area, although it only needs to have a few thread wires, said extraction thread being configured to thread on the internal sheath thread, with the object of fixing and immobilising the lower part of the sheath for the extraction thereof, thereby avoiding its rotation.

In order to fasten and immobilise the upper part of the sheath the second tool comprises a bushing, configured to slip through the axis, the interior of said bushing comprising a plurality of complementary ribs, teeth or threading, configured to collaborate with the sheath ribs, for which on introducing or inserting the bushing into the upper part of the sheath its rotation is prevented while the sheath is unthreaded from the sleeper.

In this manner, to extract the sheath, which is blocked, it is then threaded with the second tool which, as the sheath is blocked it will drag it along with it through the helical projection, leaving its hollow free with no breakage of material or damage to the sleeper, allowing a new sheath to be subsequently introduced to replace the former deteriorated or broken sheath and after the threading of the sheath in the concrete the anti-rotation element is pressure-assembled in such a manner that its external polygonal transverse section part coincides with the concrete hollow and its ribs with those of the sheath, easily and with a minimum of effort.

### DESCRIPTION OF THE DRAWINGS

For the purpose of complementing this description and to help to better understand the characteristics of the invention, a set of drawings in accordance with a preferred practical embodiment thereof has been included as an integral part of this description, in which the following figures have been represented in an illustrative and unlimitative manner:
- Fig. 1: shows a schematic representation of a transverse section of the assembly of the fixing of the rail to a sleeper that comprises the sheaths proposed by the invention;
- Fig. 2: shows four perspective views of the sheath of the invention, with a coach screw, with and without the anti-rotation means and a sectioned perspective view, wherein the inner thread of the sheath can be observed;
- Fig. 3: shows two perspective views, one upper and another lower, of the anti-rotation means comprised by the sheath of the invention;
- Fig. 4: shows a longitudinal section of the sheath with the anti-rotation means in a coupled position and housing a coach screw, wherein the configuration of the upper and lower parts that comprise a helical rabbetting on the outer surface of the sheath can be observed;
- Fig. 5: shows a section of a perspective view of a sleeper which has been manufactured with a sheath of the invention, wherein the impress of the sheath in the sleeper and the helical projection formed in the sleeper by the helical rabbetting of the sheath during the concreting process of the sleeper with the sheath can be observed;
- Fig. 6: shows a perspective view of a first tool proposed by the invention to extract the anti-rotation means of the sheath;
- Fig. 7: shows a perspective view of a second tool configured to replace and handle the sheath with respect to its service position on the sleeper; and
- Fig. 8: shows a detailed perspective view of a bushing that comprises the second tool shown in Figure 7.

### PREFERRED EMBODIMENT OF THE INVENTION

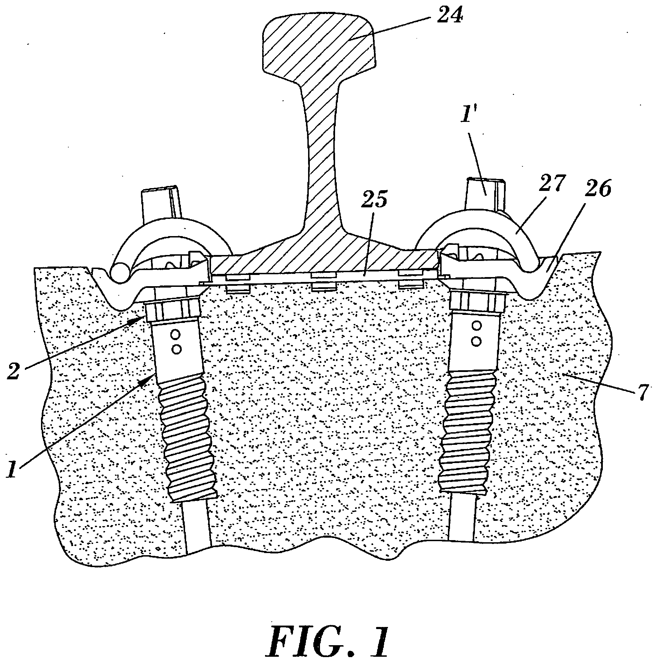

According to the foregoing figures, we can observe that in one of the possible embodiments of the invention, a first aspect thereof relates to a sheath for fixing railway tracks totally free of projections that prevent its rotation which is configured to contain, in a threaded manner, a coach screw (1') to fasten a rail (24) to a concrete sleeper (7) by means of a base plate (25) disposed between said rail (24) and said sleeper (7), guide plates (26) located on the side ends of a rail base (24) configured to house an elastic flange (27), as can be observed in Figure 1.

The sheath (1) consists of a single-piece plastic body having a cylindrical configuration with external tapering.

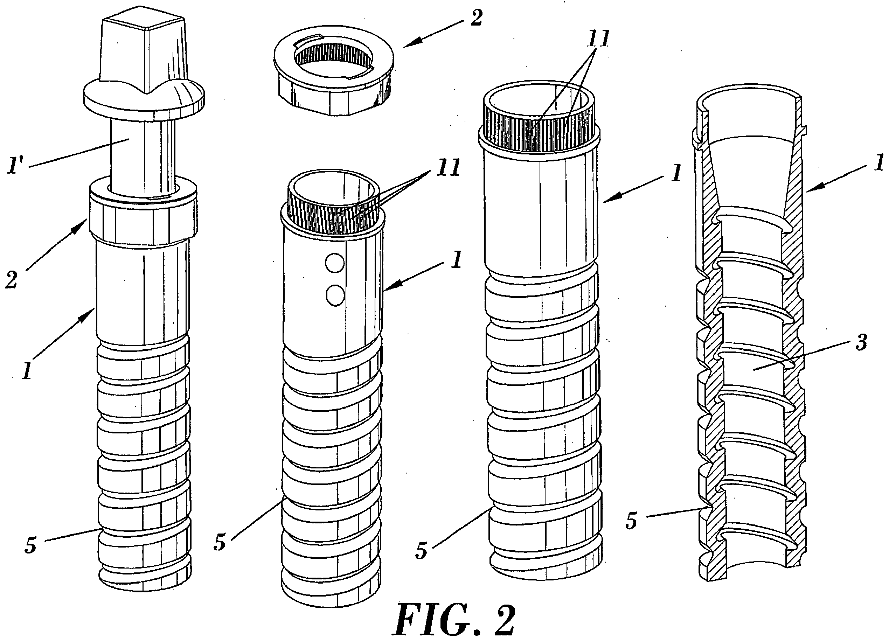

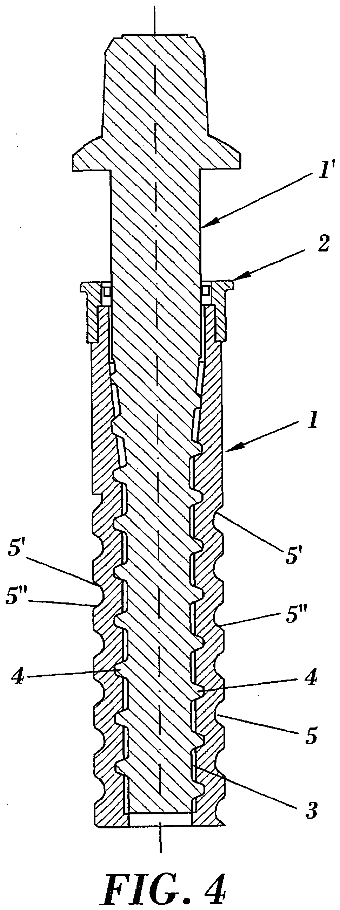

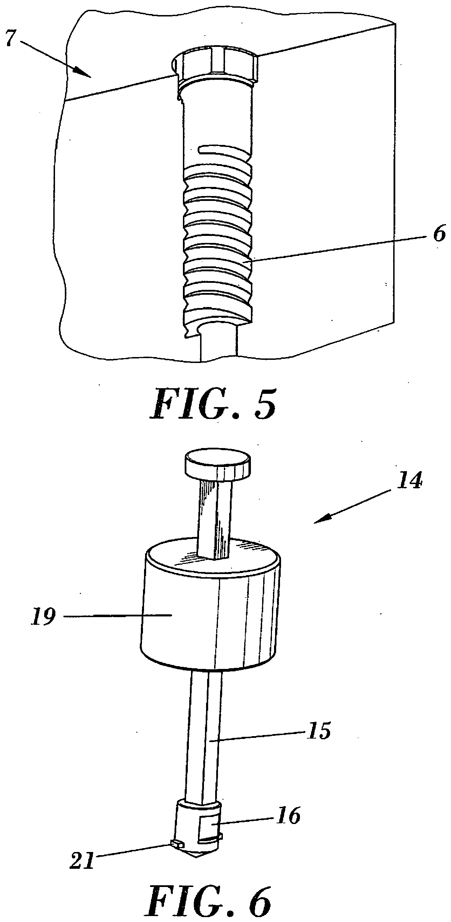

As can be observed in Figures 2 and 4, the sheath (1) comprises a helical rabetting (5) on an outer surface of the cylindrical sheath (1) body that does not extend to an upper smooth surface, said helical rabbetting (5) being configured to house concrete during the concreting process of the sleeper (7) with the sheath (1), in such a manner that the helical rabbetting (5) houses a concrete helical projection (6) that forms part of the sleeper (7) itself, as can be observed in Figure 5, said helical rabbetting (5) being configured to thread with respect to said helical projection (6), which is a thread with which the helical rabetting (5) collaborates, thereby allowing sheath (1) extraction from the sleeper (7) by means of unthreading, without damaging in any way or tearing off material from the sleeper (7).

On the other hand, the sheath (1) comprises an inner female thread (3) which is an internal housing configured to house an external male thread (4) of the coach screw (1').

The helical rabbetting (5) follows the path of the inner thread (3) but with the peculiarity that the helical rabbetting (5) coincides with the valleys of the inner thread (3), with the object of maintaining a constant thickness of the sheath (1) body walls.

As can be observed in Figure 4, the helical rabbetting (5) comprises an upper part (5') having a concave curved configuration and a lower part (5") having a straight configuration with a slope of approximately 45º with respect to a central axis of the sheath (1).

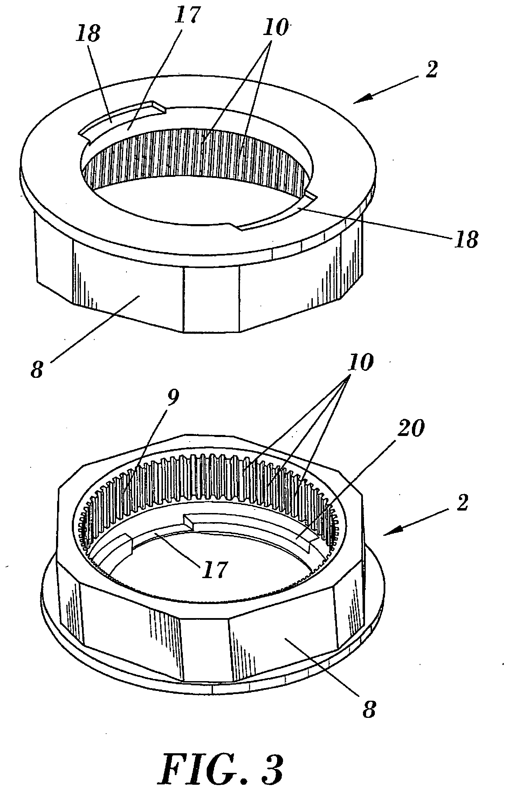

Likewise, the sheath (1) of the invention comprises removable anti-rotation means (2) configured to prevent a rotation movement of the sheath (1) around its central axis when housed in the sleeper (7), as shown in Figures 2 and 3.

The removable anti-rotation means (2) are configured to avoid undesired unthreading, for which it comprises means configured to be in contact with the sleeper (7) and avoid the rotation of said anti-rotation means (2) with respect to said sleeper (7) and, given the coupling between the anti-rotation means (2) and the sheath (1), also prevent sheath (1) rotation.

Said anti-rotation means (2) consist of a part which has a ringed configuration having an internal part (9) with a plurality of ribs (10) configured to couple and collaborate with a plurality of complementary ribs (11) comprised by the sheath (1) in an upper external part, preventing a relative rotation movement between said sheath (1) and said anti-rotation means (2) when they are in a coupled position.

The coupling between the sheath (1) and the anti-rotation means (2) prevents a relative rotation movement, making it easy to make the anti-rotation means (2) coincide in the concrete hollow and with the sheath (1) body simultaneously.

On the other hand, the anti-rotation means (2) comprise an external polygonal transverse section part (8), specifically hexagonal, configured to prevent a relative rotation movement between said anti-rotation means (2) and the sleeper (7).

Likewise, the anti-rotation means (2) comprise two slits (17), in an upper side, each slit (17) being covered by a flange (18), and having two stops (20) with bayonet closing means on the internal part, with which a tool collaborates to extract said anti-rotation means (2) from a coupled position with the sheath (1), as will be defined later.

A second aspect of the invention relates to a procedure to replace a sheath (1) such as that previously defined in a concrete sleeper (7), which comprises the following stages:
- unthread the coach screw (1'),
- traction the anti-rotation means (2) separating them from the sheath (1),
- unthread the sheath (1) from the sleeper (7) by unthreading the helical rabbetting (5) from the helical projection (6),
- thread another sheath (1) in the sleeper (7) by threading the helical rabbetting (5) in the helical projection (6),
- couple anti-rotation means (2) to the upper part of the sheath (1), and
- thread a coach screw (1').

Finally, a third aspect of the invention relates to tools for executing the previously described procedure.

Figure 6 shows a first tool (14) configured to extract anti-rotation means (2) from the coupled position with the sheath (1), for which said first tool (14) comprises an axis (15) having an end (16) that consists of two flaps (21) configured to break the protection flanges (18) that cover the slits (17) and insert the anti-rotation means (2) into said slits (17) through the striking action of a weight (19) configured to slip through the axis (15), said flaps (21) being configured to collaborate with the stops (20) that comprise the anti-rotation means (2), allowing the extraction and replacement thereof with respect to the sheath (1).

The protection flanges (18) consist of a thin plastic wall, due to which in order to break them the flaps (21) are disposed in correspondence with the slits (17), after which the weight (19), which is configured to impact and break the flanges (18), is allowed to fall, allowing the flaps (21) to be inserted in the slits (17).

On the other hand, the stops (20) of the anti-rotation means (2) are configured to contact the flaps (21) upon axis (15) rotation, allowing the first tool (14) stops against the anti-rotation means (2), moment in which the weight (19) is actuated with a down-up movement to extract said anti-rotation means (2) from their coupled position with the sheath (1).

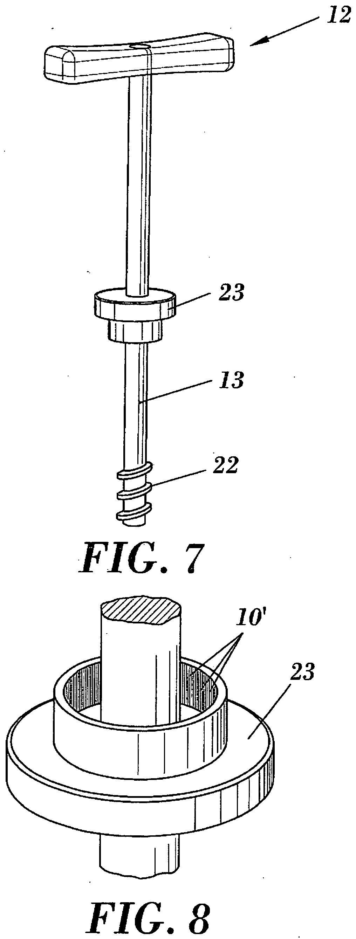

On the other hand, Figures 7 and 8 show a second tool (12) configured to extract the sheath (1) from the sleeper (7), which comprises an axis (13) which in a lower external zone has an extraction thread (22) configured to be threaded in the inner thread (3) of the sheath (1), with the object of fixing and immobilising the lower part of the sheath (1) for the extraction thereof, thereby avoiding its rotation.

On the other hand, the second tool (12) comprises a bushing (23) configured to slip through the axis (13), the interior of said bushing (23) comprising a plurality of complementary ribs (10') configured to collaborate with the ribs (11) of the sheath (1), for which, on introducing or inserting the bushing (23) in the upper part of the sheath (1), the rotation thereof is prevented while the sheath (1) is unthreaded from the sleeper (7).

In this manner, the sheath (1) is unthreaded with the second tool (12) which, as the sheath (1) is blocked it will drag it along with it through the helical projection (6), leaving its hollow free with no breakage of material or damage to the sleeper (7), allowing a new sheath (1) to be subsequently introduced to replace the former, and after the threading of the sheath (1) in the concrete the anti-rotation means (2) is pressure-assembled in such a manner that its external part (8) coincides with the concrete hollow and its ribs (10) with the complementary ribs (11) of the sheath (1).

Based on this description and the set of drawings, a person skilled in the art will understand that the embodiments of the invention that have been described can be combined in multiple manners within the scope of the invention. The invention has been described according to some preferred embodiments thereof, but for a person skilled in the art it will be evident that multiple variations can be introduced in said preferred embodiments without exceeding the scope of the invention being claimed, as defined by the appended claims.

## Claims

1. Sheath for railway track fixings, configured to contain a coach screw (1') for fixing a rail (24) to a sleeper (7) through an elastic flange (27), the sheath (1) having a cylindrical configuration with external tapering, **characterised in that** an outer surface of the sheath (1) is totally free of projections that prevent the rotation thereof and comprises helical rabbetting (5) on the outer surface that is configured to house a helical projection (6) of the sleeper (7) and thread with respect to said helical projection (6), said sheath (1) comprising an inner thread (3) configured to house a male thread (4) of the coach screw (1') and comprising removable anti-rotation means (2) at an external upper part in the sheath (1) configured to prevent a rotation movement of the sheath (1) when it is housed in the sleeper (7).

2. Sheath for railway track fixings, according to claim 1, **characterised in that** the helical rabbetting (5) comprises an upper part (5') having a concave curved configuration and a lower part (5") having a straight configuration with a slope of approximately 45° with respect to a central sheath (1) axis.

3. Sheath for railway track fixings, according to any of claims 1 and 2, **characterised in that** the anti-rotation means (2) have a ringed configuration which has an internal part (9) having a plurality of ribs (10) configured to couple and collaborate with a plurality of complementary ribs (11) that comprise the sheath (1) in an external upper part.

4. Sheath for railway track fixings, according to any of the preceding claims, **characterised in that** the anti-rotation means (2) comprise an external polygonal transverse section part (8) configured to prevent a relative rotation movement between said anti-rotation means (2) and the sleeper (7).

5. Sheath for railway track fixings, according to claim 4, **characterised in that** the anti-rotation means (2) comprise at least two slits (17), on an upper side, each slit (17) being covered by a flange (18), and having at least two stops (20) in the internal part (9).

6. Method for replacing a sheath (1) according to claim 5 in a sleeper (7) which comprises the following stages:
- unthread the coach screw (1'),
- traction the anti-rotation means (2) separating them from the sheath (1),
- unthread the sheath (1) from the sleeper (7) by unthreading the helical rabbetting (5) from the helical projection (6),
- thread another sheath (1) in the sleeper (7) by threading the helical rabbetting (5) in the helical projection (6),
- couple anti-rotation means (2) to the upper part of the sheath (1), and
- thread a coach screw (1').

7. Tool for executing a method according to claim 6, **characterised in that** it consists of a first tool (14), configured to extract the anti-rotation means (2) from a coupled position with the sheath (1), that comprises an axis (15) having an end (16) that comprises as many flaps (21) as slits (7) in the anti-rotation means (2), said flaps (21) being configured to break the flanges (18) and insert into the slits (17) in said anti-rotation means (2) through the striking action of a weight (19) configured for slipping around the axis (15), said flaps (21) being configured to collaborate with the stops (20) that comprise the anti-rotation means (2).

8. Tool for executing a method according to claim 6, **characterised in that** it consists of a second tool (12), configured to extract the sheath (1) from the sleeper (7), which comprises an axis (13) having an extraction thread (22) in a lower external zone configured to be threaded in the inner thread (3) of the sheath (1), said second tool (12) comprising a bushing (23), configured for slipping around the axis (13), the interior of said bushing (23) comprising a plurality of complementary ribs (10') configured to collaborate with the ribs (11) of the sheath (1) and prevent the rotation thereof while unthreading the sheath (1) from the sleeper (7).

## Patentansprüche

1. Umhüllung für Bahnschienenbefestigungen, die derart konfiguriert ist, eine Schienenschraube (1') zum Befestigen einer Schiene (24) an einer Schwelle (7) durch einen elastischen Flansch (27) aufzunehmen, wobei die Umhüllung (1) eine zylindrische Konfiguration mit einer Außenverjüngung aufweist, **dadurch gekennzeichnet, dass** eine Außenfläche der Umhüllung (1) vollständig frei von Vorsprüngen ist, die deren Rotation verhindern, und eine schraubenförmige Nut (5) an der Außenfläche umfasst, die so konfiguriert ist, einen schraubenförmigen Vorsprung (6) der Schwelle (7) und Gewinde bezüglich des schraubförmigen Vorsprunges (6) aufzunehmen, wobei die Umhüllung (1) ein Innengewinde (3) umfasst, das derart konfiguriert ist, einen Gewindezapfen (4) der Schienenschraube (1') aufzunehmen, und ein entfernbares Drehsicherungsmittel (2) an einem äußeren oberen Teil in der Umhüllung (1) umfasst, das derart konfiguriert ist, eine Rotationsbewegung der Umhüllung (1) zu verhindern, wenn sie in der Schwelle (7) untergebracht ist.

2. Umhüllung für Bahnschienenbefestigungen nach Anspruch 1, **dadurch gekennzeichnet, dass** die schraubenförmige Nut (5) ein oberes Teil (5') mit einer konkaven gekrümmten Konfiguration und ein unteres Teil (5") mit einer geraden Konfiguration und mit einer Steigung von etwa 45° in Bezug auf eine zentrale Achse der Umhüllung (1) umfasst.

3. Umhüllung für Bahnschienenbefestigungen nach einem der Ansprüche 1 oder 2, **dadurch gekennzeichnet, dass** das Drehsicherungsmittel (2) eine Ringkonfiguration aufweist, die ein Innenteil (9) mit der Mehrzahl von Rippen (10) aufweist, die so konfiguriert sind, mit einer Mehrzahl komplementärer Rippen (11) zu koppeln und zusammenzuwirken, die die Umhüllung (1) in einem äußeren oberen Teil umfasst.

4. Umhüllung für Bahnschienenbefestigungen nach einem der vorhergehenden Ansprüche, **dadurch gekennzeichnet, dass** das Drehsicherungsmittel (2) ein äußeres polygonales Querschnittsteil (8) umfasst, das derart konfiguriert ist, in eine relative Rotationsbewegung zwischen dem Drehsicherungsmittel (2) und der Schwelle (7) zu verhindern.

5. Umhüllung für Bahnschienenbefestigungen nach Anspruch 4, **dadurch gekennzeichnet, dass** das Drehsicherungsmittel (2) zumindest zwei Schlitze (17) an einer oberen Seite umfasst, wobei jeder Schlitz (17) durch einen Flansch (18) bedeckt ist und zumindest zwei Anschläge (20) in dem Innenteil (9) aufweist.

6. Verfahren zum Austausch einer Umhüllung (1) nach Anspruch 1 in einer Schwelle (7), mit den folgenden Schritten:
- Herausschrauben der Schwellenschraube (1'),
- Ziehen des Drehsicherungsmittels (2), wobei es von der Umhüllung (1) getrennt wird,
- Abschrauben der Umhüllung (1) von der Schwelle (7) durch Abschrauben der schraubenförmigen Nut (5) aus dem schraubenförmigen Vorsprung (6),
- Schrauben einer anderen Umhüllung (1) in die Schwelle (7) durch Einschrauben der schraubenförmigen Nut (5) in den schraubenförmigen Vorsprung (6),
- Koppeln des Drehsicherungsmittels (2) mit dem oberen Teil der Umhüllung (1), und
- Einschrauben einer Schwellenschraube (1').

7. Werkzeug zum Ausführen eines Verfahrens nach Anspruch 6, **dadurch gekennzeichnet, dass** es aus einem ersten Werkzeug (14) besteht, das derart konfiguriert ist, das Drehsicherungsmittel (2) von einer gekoppelten Position mit der Umhüllung (1) herauszuziehen, das eine Achse (15) mit einem Ende (16) umfasst, das so viele Klappen (21) wie Schlitze (7) in dem Drehsicherungsmittel (2) umfasst, wobei die Klappen (21) so konfiguriert sind, die Flansche (18) zu brechen und in die Schlitze (17) in dem Drehsicherungsmittel (2) durch die Schlagwirkung eines Gewichts (19) einzutreten, das zum Gleiten um die Achse (15) konfiguriert ist, wobei die Klappen (21) so konfiguriert sind, mit den Anschlägen (20) zusammenzuwirken, die das Drehsicherungsmittel (2) umfassen.

8. Werkzeug zum Ausführen eines Verfahrens nach Anspruch 6, **dadurch gekennzeichnet, dass** es aus einem zweiten Werkzeug (12) besteht, das derart konfiguriert ist, die Umhüllung (1) von der Schwelle (7) herauszuziehen, das eine Achse (13) mit einem Extraktionsgewinde (22) in einer unteren äußeren Zone umfasst, das zum Schrauben in das Innengewinde (3) der Umhüllung (1) konfiguriert ist, wobei das zweite Werkzeug (12) eine Buchse (23) umfasst, die zum Gleiten um die Achse (13) konfiguriert ist, wobei das Ende der Buchse (23) eine Mehrzahl komplementärer Rippen (10') umfasst, die so konfiguriert sind, mit den Rippen (11) der Umhüllung (1) zusammenzuwirken und deren Drehung zu verhindern, wenn die Umhüllung (1) von der Schwelle (7) abgeschraubt wird.

## Revendications

1. Gaine pour la fixation de rails ferroviaires, configurée pour contenir un tire-fond (1') pour fixer un rail (24) à une traverse (7) à travers une bride élastique (27), la gaine (1) ayant une configuration cylindrique avec une conicité externe, **caractérisée en ce qu'**une surface extérieure de la gaine (1) est totalement dénuée de projections qui empêchent sa rotation et comprend une feuillure hélicoïdale (5) sur la surface extérieure qui est configurée pour abriter une projection hélicoïdale (6) de la traverse (7) et un filetage relativement à ladite projection hélicoïdale (6), ladite gaine (1) comprenant un filetage interne (3) configuré pour abriter un filetage mâle (4) du tire-fond (1') et comprenant des moyens anti-rotation amovibles (2) au niveau d'une partie supérieure extérieure de la gaine (1) configurée pour empêcher un mouvement de rotation de la gaine (1) quand elle est abritée dans la traverse (7).

2. Gaine pour la fixation de rails ferroviaires, selon la revendication 1, **caractérisée en ce que** la feuillure hélicoïdale (5) comprend une partie supérieure (5') ayant une configuration incurvée concave et une partie inférieure (5") ayant une configuration droite avec une pente d'approximativement 45° relativement à un axe de la gaine central (1).

3. Gaine pour la fixation de rails ferroviaires, selon l'une quelconque des revendications 1 et 2, **caractérisée en ce que** les moyens anti-rotation (2) ont une configuration en anneau ayant une partie interne (9) comprenant une pluralité de nervures (10) configurées de manière à se coupler et à collaborer avec une pluralité de nervures complémentaires (11) qui comprennent la gaine (1) dans une partie supérieure extérieure.

4. Gaine pour la fixation de rails ferroviaires, selon l'une quelconque des revendications précédentes, **caractérisée en ce que** les moyens anti-rotation (2) comprennent une partie de section transversale polygonale extérieure (8) configurée pour empêcher un mouvement de rotation relatif entre lesdits moyens anti-rotation (2) et la traverse (7).

5. Gaine pour la fixation de rails ferroviaires, selon la revendication 4, **caractérisée en ce que** les moyens anti-rotation (2) comprennent au moins deux fentes (17) sur un côté supérieur, chaque fente (17) étant recouverte par une bride (18) et ayant au moins deux butées (20) dans la partie interne (9).

6. Procédé de remplacement d'une gaine (1) selon la revendication 5, dans une traverse (7) qui comprend les étapes suivantes :
- dévisser le tire-fond (1'),
- tirer les moyens anti-rotation (2) en les séparant de la gaine (1),
- dévisser la gaine (1) de la traverse (7) en dévissant la feuillure hélicoïdale (5) de la projection hélicoïdale (6),
- visser une autre gaine (1) dans la traverse (7) en vissant la feuillure hélicoïdale (5) dans la projection hélicoïdale (6)
- raccorder les moyens anti-rotation (2) à la partie supérieure de la gaine (1) et
- visser un tire-fond (1').

7. Outil pour exécuter un procédé selon la revendication 6, **caractérisé en ce qu'**il est constitué d'un premier outil (14) configuré pour extraire les moyens anti-rotation (2) d'une position couplée avec la gaine (1), qui comprend un axe (15) ayant une extrémité (16) comprenant autant de volets (21) que de fentes (7) dans les moyens anti-rotation (2), lesdits volets (21) étant configurés pour rompre les brides (18) et s'insérer dans les fentes (17) dans lesdits moyens anti-rotation (2) par l'action de frappe d'un poids (19) configuré pour glisser autour de l'axe (15), lesdits volets (21) étant configurés pour collaborer avec les butées (20) qui comprennent les moyens anti-rotation (2).

8. Outil pour exécuter un procédé selon la revendication 6, **caractérisé en ce qu'**il est constitué d'un second outil (12), configuré pour extraire la gaine (1) de la traverse (7), qui comprend un axe (13) ayant un filetage d'extraction (22) dans une zone extérieure inférieure configurée pour être vissée dans le filetage interne (3) de la gaine (1), ledit second outil (12) comprenant une bague (23) configurée pour glisser autour de l'axe (13), l'intérieur de ladite bague (23) comprenant une pluralité de nervures complémentaires (10') configurées pour collaborer avec les nervures (11) de la gaine (1) et empêcher leur rotation tout en dévissant la gaine (1) de la traverse (7).
